# EUROPEAN PATENT APPLICATION

(11) **EP 0 938 845 A1**
(43) Date of publication of application: **01.09.1999**
(21) Application number: 99103668.2
(22) Date of filing: 25.02.1999
(51) Int. Cl.: A21D 8/04, A21D 2/26

(54) **Method of producing breads (with transglutaminase and partial protein hydrolysates) and enzym preparation**

(30) Priority: 27.02.1998 JP 4691298
(71) Applicant: Ajinomoto Co., Ltd., Tokyo (JP)
(72) Inventor: Kuraishi, Chiya c/o Food Res. & Dev. Laboratories, Kawasaki-shi, Kanagawa-ken (JP); Sato, Kazumi, Osaka Branch, Ajinomoto Co.,Inc., Osaka-shi, Osaka-fu (JP); Tanaka, Haruo c/o Food Res. & Dev. Laboratories, Kawasaki-shi, Kanagawa-ken (JP)
(74) Representative: Strehl Schübel-Hopf & Partner

(57) **Abstract**

A method for producing breads by using transglutaminase and protein partial hydrolysates as the raw materials in such a manner that the transglutaminase and protein partial hydrolysates together with other raw materials are added to and mixed with the principal raw material grain flour. The advantageous effect of transglutaminase improves the properties of bread.

## Description

The present invention relates to a method for producing breads and an enzyme preparation for breads; more specifically, the invention relates to a method for producing breads of improved quality, by using a combination of transglutaminase and protein partial hydrolysates such as wheat protein partial hydrolysate, milk protein partial hydrolysate, and soy bean protein partial hydrolysate, as well as an enzyme preparation for breads, containing any one or both of transglutaminase and the wheat protein partial hydrolysate.

Breads with a long history as staple foods are now occupying a significant position as staple foods even in Japan, following the change of the eating habits toward European style.

As has been well known, breads are fundamentally produced by appropriately adding yeast, salt, butter, sugar and the like to wheat flour or other grain flours and water as the main raw materials to prepare dough, fermenting and then baking (or steam heating) the resulting dough.

In recent years, however, various types of additives have been used other than general food materials, so as to cope with large-scale production equipment, mass distribution, diversified consumer's tastes, and the demand for frozen dough. These additives are used in almost all of bread products on market, although their amounts are variable. For the purpose of stabilizing dough or conferring freezing resistance to dough, for example, potassium hydrobromic acid, sodium ascorbate and emulsifiers are generally used.

Among these additives, chemical substances not only give adverse impression when these are displayed on labels but also cause concerns about human health in a practical sense. Therefore, the use of these substances is sometimes held back. For example, potassium hydrobromate traditionally used for stabilizing dough causes concerns due to carcinogenicity, so many manufacturers have held back the use thereof in recent years.

In such circumstances, enzymes including protease, amylase and hemicellulase have been used widely so as to modify the quality of breads. Because enzymes are not synthetic chemicals but natural materials produced by fermentation and because enzymes inactivated in final bread products produced by a heating process at the final step lose the physiological actions and therefore never involve any health problem, the labeling thereof is not required. Hence, enzymes have got appraisal as materials satisfying the recent demands toward health and natural products.

As described above, the enzymes for use in breads are mainly enzymes with a function to degrade substrates into low molecular substances, like protease and amylase. Except for transglutaminase described hereinafter, accordingly, it has never been known so far the presence of any enzyme (enzyme preparation) for breads and with a function to reinforce the crosslinking structure of dough and thereby stabilize the dough, like potassium hydrobromate and ascorbic acid as described above. Regarding the production of frozen dough, in particular, the loosing of the dough after freezing and thawing is a serious problem in the industry. A material capable of overcoming the problem from natural origins, has been needed.

As has been well known, transglutaminase is an enzyme with a function to crosslink and polymerize protein. This enzyme can react with wheat protein, and JP-A-4-360641 discloses a method for producing high-quality breads by using the enzyme transglutaminase (abbreviated as TGase hereinbelow). Nevertheless, JP-A-4-360641 simply discloses a method for producing breads by using TGase in combination with general raw materials. In other words, the publication does not describe a method for regulating the reaction with TGase in detail but simply describes only a method by using TGase as one of the raw materials of breads.

However, dough frequently gets too firm because of over-reaction of TGase, depending on the processing conditions. When TGase reaction is promoted at a far extent as described above, the resulting dough cannot rise well at a fermentation process, so that the appearance of the final product or the quality of texture might be damaged.

Based on such background art, the industry needs a practically excellent method for using TGase for bread production by utilizing the TGase function to crosslink protein for stabilizing dough, characterized in that the method is capable of regulating the enzyme action so as not to harden the resulting dough too much through the over-reaction of the enzyme, whereby high-quality products can be produced finally.

In such technical situation, it is an object of the invention to provide an excellent method for using TGase for bread production.

After intensive research works so as to overcome the problems described above, the present inventors have firstly found that breads of improved quality can be produced from not-excessively-hardened dough, by using a combination of TGase with protein partial hydrolysates such as wheat protein partial hydrolysate, milk protein hydrolysate, and soy bean protein hydrolysate, and increasing the volume of water to be added to raw material blends with respect to the volume according to conventional methods, if necessary or if desired. Based on such finding, the invention has been achieved.

More specifically, the invention relates to a method for producing breads by using transglutaminase and protein partial hydrolysates, comprising adding transglutaminase and protein partial hydrolysates together with other raw materials, to the principal raw material grain flour and mixing them together, as well as an enzyme preparation containing the transglutaminase and protein partial hydrolysates as the effective ingredients for use in the method for producing breads. The invention also relates to the method for producing breads, wherein breads of improved quality can be produced by increasing the volume of water to be added to raw material blends to more than conventional volumes.

The invention will now be described in detail hereinbelow.

In accordance with the invention, characteristically, the adverse influences of TGase over dough, such as too much hardening of dough, are technically suppressed, so as to improve the quality of breads on the basis of the enzymatic action of TGase.

Firstly, the method for producing breads in accordance with the invention will be described.

The term "breads" in accordance with the invention means a wide variety of breads produced by appropriately adding water (milk is sometimes used) and yeast, and salt, oils and fats, egg, skim milk, starches, sugars and various additives to the principal raw material grain flour, kneading the resulting mixture to prepare dough, fermenting and subsequently baking the resulting dough (or heating the dough in steam). Except for the use of transglutaminase and one or more selected from wheat partial hydrolysate, milk protein partial hydrolysate, soy bean protein partial hydrolysate and other protein partial hydrolysates, these principal raw material and other raw materials are blended together in a conventional manner, with no specific limitation. Porous foods produced by rising dough with baking powder without yeast addition are sometimes ingested as so-called breads, and in a broad sense, such foods are also encompassed within the breads of the invention. It is needless to say that Chinese stuffed buns produced by rising dough by spontaneous fermentation, by fermentation with added yeast, by means of baking powder, or by means of yeast and baking powder in combination are also encompassed within the breads of the invention.

The method for producing breads as well as the principal raw material and raw materials in accordance with the invention are according to conventional methods, except for the combined addition and use of transglutaminase and protein partial hydrolysates as the raw materials and for slight possible change of the processes due to the use.

Accordingly, the grain flour includes conventional ones such as wheat flour (sometimes simply referred to as "flour" hereinbelow), barley flour, rye flour, corn flour, rice flour, and soy bean flour, and any one or two or more thereof are used in combination as the principal raw material. Generally, flour is used as the principal raw material.

As other materials, those according to conventional methods are appropriately used, including yeast, and sometimes including baking powder, salt, vegetable and animal oils and fats, processed oil such as shortening, milk components such as cow 's milk, whole fat powdery milk, skim milk, casein, cheese and butter, eggs such as liquid egg and powdery egg, sugars such as sugar, fructose, glucose and sugar alcohol, polysaccharides from natural origins, dextrins, various starches, gelatin, soy bean protein, wheat protein, gluten, various flavors and spices, sweeteners, seasonings, cocoa and chocolate.

In a similar manner to conventional methods, other additives are with no specific limitation, as long as it is generally permitted to add the additives to food. For example, other additives include yeast food, emulsifiers, edible dyes, enzymes and the like.

Such emulsifiers are for example those to be generally added to breads, including glycerin fatty acid ester, sorbitan fatty acid ester, polyglycerin fatty acid ester, sucrose fatty acid ester, propylene glycol fatty acid ester and stearyl organic acid ester.

As such enzymes, additionally, use may be made of a variety of commercially available amylases such as α-amylase, β-amylase, isoamylase and glucoamylase, and hemicellulase, and a variety of commercially available proteases. Furthermore, use may be made of oxidizing enzymes such as peroxidase, glucose oxidase, polyphenol oxidase, and lipoxygenase. In addition to those described above, various enzymes may be used, depending on the objective. The enzymes are with no specific limitation.

With no specific limitation, the method for producing breads in accordance with the invention comprises preparing dough by kneading together the principal raw material and other raw materials and fermenting the dough in the same manner as in conventional methods. In the same manner as in conventional methods, any of so-called sponge method and straight method may be used, so the kneading process and fermentation process of the resulting dough are with no specific limitation.

Subsequently, the fermented dough is baked in an oven and the like in the same manner as for general breads, to produce breads by the inventive method. Heating other than baking may sometimes be employed. For example, steamed breads are specifically illustrated. This is also true with conventional methods.

Description will now be made of those agents necessary for the exertion of the advantages of the invention, including TGase, and wheat protein partial hydrolysate, milk protein partial hydrolysate, soy bean protein partial hydrolysate and other protein hydrolysates.

As well known, TGase is an enzyme catalyzing the acyl transfer reaction between the γ-carboxyamide group of the glutamine residue in a protein or a peptide chain and a primary amine and having an action to form the crosslinking bond of ε-(γ-Glu)-Lys when the primary amine is the lysine residue of a protein.

TGase from any origin may be used in accordance with the invention, as long as the TGase has the activity of TGase. As such TGase, for example, use may be made of those from microorganisms such as genus Streptoverticillium (abbreviated as BTGase; see JP-A-64-27471), those from mammalian animals such as guinea pig (abbreviated as GTGase; see JP-A-58-14964), those from fishes such as cod (Nobuo Seki, et al., Nippon Fishery Association Journal, vol. 56, No. 1, page 125 (1990)), and those present in blood (sometimes referred to as Factor XIII), and additionally those prepared by genetic recombination (see for example JP-A-1-300889, JP-A-5-199883, JP-A-6-225775, and WO93/15234).

Any of these TGases may be used as the TGase of the invention. From the standpoint of the practical use of food, however, TGases from microorganisms are preferably used because they can be produced at a mass scale and they are thus commercially available economically.

In accordance with the invention, TGase is added within a concentration (amount of use) range of 0.02 to 20 units (U), preferably 0.05 to 10 U per one gram of protein contained in the principal raw material grain flour. At a concentration below 0.02 U, the desired effect of TGase cannot be exerted; at a concentration above 20 U, adversely, the resulting dough is so firmly hardened that the dough cannot sufficiently extend or cannot rise at the fermentation process. Therefore, the resulting bread products are of seriously deteriorated quality including appearance and texture. The range is just a simple standard, so the range may satisfactorily be modified appropriately, if necessary. Breads are on worldwide traditional diets as staple food, and various types of breads from variable blends are produced by diverse methods. A person skilled in the art can readily find an appropriate amount of TGase for use, after more or less preliminary trials with reference to the range thereof.

In accordance with the invention, the TGase activity is assayed by the following hydroxamate method, and the unit thereof is also defined by the method. More specifically, TGase reaction in a reaction system containing substrates benzyloxycarbonyl-L-glutamyl glycine and hydroxylamine in a Tris buffer, pH 6.0 at 37 °C generates hydroxamic acid, which is then prepared as an iron complex in the presence of trichloroacetic acid; based on the subsequently measured absorbance at 525 nm, hydroxamic acid is determined with reference to a standard curve; and then, one unit (1 U) of TGase is defined as the amount of the enzyme to generate 1 µmol hydroxamic acid per one minute (see JP-A-64-27471).

Description will now be made of protein partial hydrolysates. The protein origins as the raw materials of the protein partial hydrolysates include wheat protein, milk protein, soy bean protein, gelatin, collagen, and corn protein, and preference is given to partial hydrolysates of wheat protein and milk protein.

Wheat protein partial hydrolysate will firstly be described. As the wheat protein partial hydrolysate, in accordance with the invention, use may be made of wheat gluten partially hydrolyzed with enzymes, acids and alkalis. With no specific limitation, the hydrolyzed wheat gluten at a deamidation ratio within a range of 5 to 70 % is generally used as the wheat protein partial hydrolysate. The term "deamidation ratio" means an indicator representing the ratio of glutamine and asparagine residues in a protein or a peptide. Otherwise, wheat protein partial hydrolysates of an average molecular weight of about 500 to 80,000 may be used. Herein, the ranges of the deamidation ratio and the average molecular weight are just simple standards, so the ranges are not strictly limited to the ranges described above. Because commercially available " Glutamine Peptide" manufactured by DMV International, Co. and "Glu-paru" manufactured by Katayama Chemical Industry Research Institute are also wheat protein partial hydrolysates, these are also encompassed within the wheat protein partial hydrolysate of the invention.

The milk protein partial hydrolysate will now be described. Herein, the term "milk protein" means a composition of milk constituents, such as casein and salts thereof, whole fat powdery milk, and skim milk. So as to recover the hydrolysate, any one of them may satisfactorily be used as the raw material. Generally, however, salts such as sodium caseinate are suitable from the standpoint of processability. As the milk protein partial hydrolysate, in accordance with the invention, use may be made of milk protein hydrolyzed with enzymes, acids, and alkalis. With no specific limitation, generally, milk protein hydrolysates at a deamidation ratio within a range of 10 to 40 % and an average molecular weight of about 500 to 20,000 are used. These ranges are simple standards, so the hydrolysates are not strictly limited to these ranges. Furthermore, a commercially available milk protein hydrolysate "Unifix" (manufactured by Nippon Shinyaku Co. Ltd.) also may be used satisfactorily.

Additionally, soy bean protein hydrolysate will now be described. Soy bean protein includes isolated soy bean protein, extracted soy bean protein, and soy bean whey protein. With no specific limitation, the method for hydrolyzing these proteins or the hydrolysis degree thereof follows the cases of wheat protein partial hydrolysate and milk protein partial hydrolysate, as described above.

In addition to the protein partial hydrolysates of natural proteins as described above, as the protein partial hydrolysate, use may further be made of commercially available peptides such as lysine peptide as the hydrolysates with the same effect. For convenience, herein, the protein partial hydrolysate in accordance with the invention includes other protein partial hydrolysates such as peptides of single amino acids, for example lysine peptide.

Such wheat protein partial hydrolysate, milk protein partial hydrolysate, soy bean protein partial hydrolysate and other protein partial hydrolysates may be used singly or in combination with two or more thereof. These are used (added) in amounts of 0.01 mg to 1 g, preferably 0.05 mg to 0.1 g as the total amount of four types of protein partial hydrolysates per one gram of protein contained in the principal raw material grain flour. If they are added in an amount below the range, disadvantageously, the effect of TGase to promote protein crosslinking to prepare a firm dough becomes too strong, so that the dough cannot sufficiently rise at the fermentation process or the resulting final product has too firm texture and the inner structure thereof (the appearance inside the resulting product) has non-uniform and poor appearance. When they are added at an amount above this range, in contrast, disadvantages such as disagreeable flavor emerge. Thus, the objective of the invention cannot be attained in any of these cases.

According to the inventive method, breads are produced in a conventional manner for producing breads, by individually weighing appropriate amounts of TGase and one or more of wheat protein partial hydrolysate, milk protein partial hydrolysate, soy bean protein partial hydrolysate, and other protein partial hydrolysates as the essential effective ingredients and then mixing and kneading the weighed materials with additional principal raw material and other raw materials. Specific processes of adding and mixing TGase and the protein partial hydrolysates are for example as follows; 1) they are preliminarily mixed with grain flour, for example wheat flour as the principal raw material; or 2) they are preliminarily dissolved in water for use. It is needless to say that TGase and protein partial hydrolysates in these cases may satisfactorily be in the form of an enzyme preparation for producing breads in accordance with the invention as described below.

The TGase and protein partial hydrolysates as the essential effective ingredients exert their effects under the progress of the enzymatic reaction of TGase during dough kneading and fermentation. Generally, the mixture of the enzyme and the substrates is required to be maintained under conditions of an appropriate temperature and an appropriate time period for the exertion of the enzymatic action. Depending on the type of a final bread product, dough should be kneaded and fermented under variable conditions, but the general methods for producing breads are such that the conditions including the temperature conditions and sufficient reaction period for allowing TGase to exert the enzymatic action are satisfied and the inventive effects are attained. Therefore, it is not necessary to device specific conditions or specific independent processes therefor. The inventive method is readily applicable to all types of breads.

As described above, breads can be produced by the inventive method, by using as the essential effective ingredients TGase and protein partial hydrolysates and preparing an enzyme preparation blended with appropriate amounts of the essential effective ingredients, if necessary or if desired, and using the formulation as one of the raw materials.

The enzyme preparation for producing breads in accordance with the invention will now be described.

The enzyme preparation in accordance with the invention requires TGase and protein partial hydrolysates as the essential effective ingredients. In addition to these ingredients, use may also be made of a variety of appropriate ingredients for use in the preparation of enzyme formulations in the art or for use as sub-raw materials for the production of breads, as follows.

The preparation may contain known food excipients, for example lactose, sucrose, maltitol, sorbitol, dextrin, branched dextrin, cyclodextrin, starches, polysaccharides, gums, and pectin. Starches include for example natural starches such as corn starch, potato starch and tapioca starch; and various processed starches. Polysaccharides and gums include for example carrageenan, guar gum, gum arabic and xanthane gum.

The inventive enzyme preparation furthermore contains proteinous materials, for example milk protein, wheat protein (gluten), soy bean protein, gelatin and egg white. The blending of milk protein and/or wheat protein (gluten) is effective for greatly enhancing the effect of the inventive enzyme preparation.

Still furthermore, salts such as sodium hydrogen carbonate, sodium citrate, sodium phosphate, sodium chloride and potassium chloride may satisfactorily be blended with the enzyme preparation. The salts possibly stabilize the enzyme activity.

Furthermore, the preparation may be blended with enzymes including a variety of commercially available α-amylase, β-amylase, isoamylase, glucoamylase, and hemicellulase and a variety of commercially available proteases. Still furthermore, the preparation may be blended with oxidizing enzymes such as peroxidase, glucose oxidase, polyphenol oxidase, and lipoxygenase. Other than these enzymes, various enzymes may be used, with no specific limitation, depending on the objective. The effect of improving the quality of breads has been established previously for these enzymes, except for TGase. When these enzymes are blended with the enzyme preparation of the present invention, such known enzymatic effect of improving the quality and the effect of TGase on the improvement of the quality as newly found by the invention are both expected (additive effect or synergistic effect).

Still additionally, the inventive enzyme preparation may satisfactorily be blended appropriately with seasonings, sugar, flavor, coloring agents, ascorbic acid and salts thereof, emulsifiers and oils and fats.

As described insofar, the emulsifiers to be blended into the inventive enzyme preparation include those to be added generally to breads, for example glycerin fatty acid ester, sorbitan fatty acid ester, polyglycerin fatty acid ester, sucrose fatty acid ester, propylene glycol fatty acid ester and stearyl organic acid ester.

The essential constituents of the inventive enzyme preparation, namely TGase and protein partial hydrolysates, are individually blended at any amount, with no specific limitation. By appropriately adjusting the amounts of TGase and wheat protein partial hydrolysate, milk protein partial hydrolysate, soy bean protein partial hydrolysate and other protein partial hydrolysates to be blended thereinto or by appropriately adjusting the ratio thereof, the objective effect of improving the quality can be yielded. As such TGase, any TGase sample with a specific activity of 1,000 U/g can generally be blended at a weight ratio of 0.5 % to 20 %, preferably 1 % to 10 % into the enzyme preparation. Meanwhile, the protein partial hydrolysate can be blended at a ratio of generally 0.1 to 50 %, preferably 0.5 to 20 %.

In the bread industry, conventionally, formulations with a blend of various additives improving the quality of breads have been commercially available and have been utilized as so-called "yeast food" or "improver". Various additives for use in the production of breads are added at trace amounts, and so as to save the laborious weighing work on the production site, various yeast foods or improvers blended with these additives are used. Yeast foods or improvers blended with constituents such as TGase and protein partial hydrolysates including wheat protein partial hydrolysate and milk protein partial hydrolysate are also encompassed within the enzyme preparation for producing breads in accordance with the invention. As such, for example, enzyme preparation s blended with TGase and protein partial hydrolysates such as wheat protein partial hydrolysate and milk protein partial hydrolysate in addition to widely known as yeast food or improvers components for use in the bread industry, such as calcium sulfate, ammonium chloride, edible salt, starch, amylase, and protease are illustrated.

The inventive enzyme preparation can be prepared by any preparative method, with no specific limitation. All the processes are according to the preparative method of enzyme preparations in the state of the art.

The inventive enzyme preparation can be used as follows; by weighting the enzyme preparation at an appropriate amount, and mixing and kneading the preparation with other raw materials, breads can be produced according to general methods for producing breads. More specifically, the enzyme preparation may be added as in the following description in the same manner as in the case that TGase and wheat protein partial hydrolysate, milk protein partial hydrolysate, soy bean protein partial hydrolysate and/or protein partial hydrolysates as the essential effective ingredients of the enzyme preparation are used, as such, not in the form of any specific enzyme preparation; 1) the enzyme preparation is preliminarily mixed with grain flour, for example wheat flour as the principal raw material; and 2) the enzyme preparation is preliminarily dissolved in water for use.

As described above, the effects of TGase and protein partial hydrolysates as the essential effective ingredients of the enzyme preparation are exerted under the progress of the enzymatic reaction of TGase during dough kneading and fermentation. Depending on the type of a bread product, various kneading conditions and fermentation conditions are required, but conventional methods for producing breads can satisfy the temperature conditions and reaction period sufficient enough for the exertion of the inventive effects. Therefore, the inventive method is readily applicable to all types of breads as described above.

As described above, the inventive method for producing breads may be a slight modification of conventional methods, in terms of the use of transglutaminase and protein partial hydrolysates; for example, the amount of water to be added may be modified. In a third place, therefore, the modification will be described.

More specifically, the inventors have found as an effective technique to procure the advantages of the invention that better effects can be yielded over bread production, by using TGase and wheat protein partial hydrolysate, milk protein partial hydrolysate, soy bean protein hydrolysate and/or other protein partial hydrolysates in addition to the use of water at a larger volume than the volume required by a general method for producing breads outside the scope of the present invention (referred to as "general method" hereinbelow).

For producing breads, generally, depending on the type and grade of the principal raw material grain flour to be used, and the types of the blended raw materials and the type of a final product, the volume of water enough to confer the optimum dough profile at the termination of the kneading process, namely the volume of water to be added, should be determined. In accordance with the invention, the thus determined optimum volume of water to be added corresponds to the " volume of water to be added according to the general method". The volume of water to be added can be determined in an empirical manner or after several pilot tests by a person skilled in the art of bakery. Depending on the temperature and humidity of the production day, the volume of water should sometimes be increased or decreased. When the volume of water is less than the optimum volume, the resulting dough is so poorly extended that the resulting bread gets too firm. When the volume of water to be added is far more than the optimum volume, the resulting dough is too loose to be satisfactorily molded or to hold a sufficient volume of gas, so that the final bread poorly extends.

For producing breads according to the inventive technique, the inventors have found that the volume of water to be added to a principal raw material such as flour is possibly by about 10 % more than the volume of water to be added according to the general method. In other words, breads produced with addition of water at a ratio of 62 % to flour according to the general method can be produced by adding water at the maximum ratio of about 72 % to flour according to the inventive technique. This indicates that a smaller volume of the raw material flours such as wheat flour can produce a larger volume of dough, namely a larger volume of breads. Thus, the inventive method is apparently excellent from the standpoints of economical effects and effective utilization of resources. Additionally, the thus produced bread can satisfy minds toward healthy diet.

Depending on the type of breads, furthermore, a larger volume of water can yield a greater effect on quality improvement. This is true for example with frozen dough and bread products with no addition of various additives, particularly emulsifiers. When frozen dough is prepared by increasing the volume of water to be added according to the inventive method, a larger volume of bread products with better appearance can be recovered when the dough is thawed and baked, than those by the general method. Additionally, breads with no addition of emulsifiers disadvantageously have less moist texture and have so dry surface after slicing. However, the breads produced by the inventive technique by increasing the volume of water could retain preferable moist texture for a prolonged term.

The effect of the increase of the volume of water to be added on quality improvement has been found by the inventors. Except for the increase of the volume of water, no modification is practiced. The effect can be exerted by either a method comprising individually weighing TGase and protein partial hydrolysates appropriately and kneading and mixing the resulting weighed materials with other raw materials according to the general method for producing breads or a method comprising using an enzyme preparation blended with appropriate amounts of TGase and protein partial hydrolysates as the ingredients and with another raw material if necessary as one of the raw materials.

Because the breads produced in accordance with the invention have high freezing resistance (see Example 1 described below), the breads can be frozen at an appropriate stage of the production process for storage or for the introduction into market as frozen food. More specifically, dough at after kneading state or divided and molded dough portions or dough at a state after secondary fermentation (so-called proofing) or breads as partially or completely baked products may be frozen and introduced into market.

Furthermore, it is needless to say that breads produced by the invention can be utilized as processed bread products. More specifically, the breads are ground for use as bread crumb or the breads are cut into pieces for use as crouton after oil frying and/or drying.

The invention will now be described in detail in the following examples. It is needless to say that the invention is not limited to these examples.

### Example 1 (Preparation of frozen roll dough by sponge method)

Hard flour (600 g), yeast (4.2 g) and water (350 g) were kneaded together, and the resulting mixture was fermented in a fermentor at 18 °C for 20 hours, to prepare a sponge dough. To the sponge dough were added hard flour (400 g), salt (18 g), sugar (50 g), shortening (80 g), skim milk (20 g), yeast food "Oriental C" (1.5 g), yeast (50 g), TGase (12.5 units), wheat protein partial hydrolysate (0.00625 g; "Glutamine Peptide" manufactured by DMV International, Co. Ltd.) and water (330 g). The resulting mixture was kneaded together by means of a mixer, to prepare dough. In this case, furthermore, TGase and the wheat protein partial hydrolysate were added at 0.1 U and 0.0525 mg, respectively per one gram of the protein in the flour.

Water was added at a total volume ratio of 68 % to the flour. A blend with no addition of TGase or wheat protein partial hydrolysate (according to conventional methods) was used for preliminary test. So as to prepare a dough state suitable for molding, the volume of water to be added to flour was optimally 62 %. In this case, the value 62 % corresponds to the volume of water to be added according to the general method. In the present example, the total volume of water to be added to the flour was 68 %, with an increment as much as 6 %, compared with the volume according to the general method.

After kneading in a mixer, the dough was rested for 20 minutes, and then was divided into 60-g portions, for subsequent resting time for 15 minutes, and the resulting portions were molded into a roll shape. Immediately thereafter, the roll portions were rapidly frozen and prepared as frozen roll dough.

### Control Example 1

As controls, roll dough was prepared in the same manner as in Example 1, except for the general 62-% ratio of water to be added and no addition of TGase or wheat protein partial hydrolysate. The resulting dough was rapidly frozen to be prepared as frozen roll dough.

### Comparative Example 1

In absolutely the same manner as in Example 1 (namely, the ratio of water to be added was at 68 %) except for no addition of TGase or wheat protein partial hydrolysate, roll dough was prepared and rapidly frozen to prepare frozen roll dough.

The resulting three types of frozen roll dough were subjected to thawing treatment at 20 °C for 2 hours and subsequent fermentation,proofing,at 35 °C for 45 minutes, and were then subjected to baking at 200 °C for 13 minutes. After baking, the baked breads were cooled and subjected to volume measurement. Furthermore, the appearance of the inner structure and the texture were tested by sensory analysis.

The results of the volume measurement are shown below in Table 1. The dough simply containing a larger volume of water in Comparative Example 1 (comparative product) was too loose, so the dough was molded with much difficulty. From the dough could be prepared a product of a larger volume than the product volume from the dough of the Control Example 1, provided that the freezing period was up to 10 days. When the freezing period was as long as 20 days, however, the dough poorly rose, which indicates that the quality was seriously damaged due to freezing. From the dough of Example 1 (the inventive product) was prepared a product of a larger volume than the product volumes of the Control Example 1 and Comparative Example 1 even after 20 days under freezing, which indicates that the dough was of excellent quality with improved freezing resistance. As to inner structure and texture, the inventive product was superior to the control product and additionally, the inventive product was crispy with fine inner structure. Thus, the inventive product was preferable. These indicate that given raw materials can generate a larger number of rolls at the same level or a higher level in terms of texture and appearance, and the number is larger by 6 % than the number of the control products.

**Table 1**

| Bread from frozen roll dough | | | | |
|---|---|---|---|---|
| Dough | Volume of water (% of flour) | Specific volume (cm³/g) after baking | | |
| | | 5 days under freezing | 10 days under freezing | 20 days under freezing |
| Control Example 1 | 62 | 4.67 | 3.88 | 3.91 |
| Comparative Example 1 | 68 | 5.19 | 4.91 | 2.69 |
| Example 1 | 68 | 6.34 | 5.10 | 4.47 |

### Example 2 (Preparation of enzyme preparation)

Four types of the enzyme preparations in accordance with the invention were prepared by blending according to the recipes (a) to (d) shown below in Table 2. A transglutaminase sample with 1000 units of TGase activity per one gram of transglutaminase derived from a microorganism of the genus Streptoverticillium was used. Furthermore, "Glutamine Peptide" manufactured by DMV International Co. Ltd. was used as the wheat protein partial hydrolysate, while "Unifix" manufactured by Nippon Shinyaku Co. Ltd. was used as the milk protein partial hydrolysate.

**Table 2**

| Enzyme preparations | | |
|---|---|---|
| Enzyme preparation | | Recipe |
| (a) | Wheat protein partial hydrolysate | 1.5 g |
| | Branched dextrin | 96.5 g |
| | TGase sample | 2 g (2,000 units) |
| (b) | Wheat protein partial hydrolysate | 3 g |
| | Milk protein partial hydrolysate | 3 g |
| | Lactose | 92 g |
| | TGase sample | 2 g (2,000 units) |
| (c) | Milk protein partial hydrolysate | 2 g |
| | Sodium caseinate | 15 g |
| | Starch | 78 g |
| | TGase sample | 5 g (5,000 units) |
| (d) | Wheat protein partial hydrolysate | 8 g |
| | Milk protein | 50 g |
| | Starch | 41 g |
| | TGase sample | 1 g (1,000 units) |

### Example 3 (Production of a loaf of bread with an enzyme preparation for breads (straight method))

Gluten-rich flour (1,000 g), butter (61 g), sugar (46 g), skim milk (16 g), salt (18 g), yeast (11 g), the enzyme preparation (a) or (b) or (c) or (d) (0.7 g) for breads as prepared in Example 2 and water (670 g) were mixed together to prepare dough. Subsequently, the dough was subjected to fermentation at 28 °C, and the resulting dough was thereafter divided into portions of a given weight, which were placed in a Pullman mold (mold for a loaf of bread) for 15 minutes, followed by proofing at 38 °C for 40 minutes. The resulting dough portions were baked in an oven at 200 °C for 30 minutes.

A preliminary test was conducted by using a blend with no addition of any inventive enzyme preparation for breads. So as to prepare a dough state suitable for molding, the optimum volume of water to be added was at 62.5 % of flour. In the present Example, a loaf of bread was prepared while water was added at ratios of 62.5 % (Example 3-1 to 3-4) according to the general method and 67 % (Example 3-5 to 3-8), larger by 4.5 %.

The amounts of TGase and protein partial hydrolysate per one gram of protein of flour are shown below in Table 3 when the enzyme preparations were used at the aforementioned amounts.

**Table 3**

| Enzyme preparation | Per one gram of protein of flour | | |
|---|---|---|---|
| | TGase (U) | Wheat protein hydrolysate (mg) | Milk protein hydrolysate (mg) |
| (a) | 0.12 | 0.0875 | - |
| (b) | 0.12 | 0.175 | 0.175 |
| (c) | 0.3 | - | 0.117 |
| (d) | 0.06 | 0.467 | - |

### Control Example 2

In absolutely the same manner as in Example 3 except that water was added at 62.5 % according to the general method and not any of the inventive enzyme preparations were added, a loaf of bread was prepared as a control.

### Comparative Example 2

In absolutely the same manner as in Example 3 (i.e. water was added at a ratio of 68 %)except for no addition of the inventive enzyme preparations, a loaf of bread was prepared.

After baking, the resulting loaf of bread was cooled. The volume thereof was measured. After the loaf was sliced, the loaf was left to stand for 2 days. Then, the appearance of the inner structure and the texture were evaluated by sensory analysis. The results are shown below in Table 4.

**Table 4**

| Volume of loaf of bread and sensory assessment | | | | |
|---|---|---|---|---|
| | Volume of water (% of flour) | Enzyme preparati on | Volume * | sensory assessment (2 days later) |
| Control Example 2 | 62.5 | - | 100 | crispy, non-uniform inner structure |
| Comparative Example 2 | 67.0 | - | 85 | dry and crumbling with no elasticity, non-uniform inner structure |
| Example 3-1 | 62.5 | (a) | 102 | elastic texture, fine and uniform inner structure |
| Example 3-2 | 62.5 | (b) | 102 | crispy, fine structure |
| Example 3-3 | 62.5 | (c) | 103 | firm and elastic texture |
| Example 3-4 | 62.5 | (d) | 104 | crispy with elasticity |
| Example 3-5 | 67.0 | (a) | 110 | moist with soft touch |
| Example 3-6 | 67.0 | (b) | 109 | moist and crispy |
| Example 3-7 | 67.0 | (c) | 108 | moist and elasctic texture |
| Example 3-8 | 67.0 | (d) | 109 | moist and viscoelastic texture |

| | | | | |
|---|---|---|---|---|
| *: the control product volume defined as 100. | | | | |

As apparently shown in the Table, all the loaves of breads with addition of water at 62.5 % according to the general method (Example 3-1 to 3-4) in the inventive product group of Example 3 had slightly larger final baked volumes than that in the Control Example 2 (control product). The Comparative Example 2 (comparative product) with addition of a larger volume of water and with no use of the inventive enzyme preparation had a low gas-holding potency and had a seriously decreased baked volume, compared with the volume of the control product. Some loaves with addition of larger volumes of water (Example 3-5 to 3-8) in the inventive product group of Example 3 had larger final baked volumes than those of the control product and the comparative product, with an increment of 8-10 % from the volume of the control product. This indicates that more loaves of breads can be produced from lesser amounts of raw materials.

Some breads with addition of larger volumes of water (Example 3-5 to 3-8)in Example 3 were moist and enriched with elastic texture even after the breads were sliced and left to stand, although the breads were made from blends with no addition of any emulsifier. These breads retained preferable texture. The control product and the comparative product were dry and crumbling on the surface after they were sliced and left to stand, so the overall texture thereof were poor. Under the conditions for producing breads in the present Example, the inventive advantages could be exerted even at the volume of water to be added according to the general method, but the advantages were enhanced when water was increasingly added.

In accordance with the invention, the effect of TGase for use in producing breads is prominently improved, whereby breads of better quality can readily be produced.

## Claims

1. A method for producing bread by mixing grain flour as the principal raw material and other conventional raw materials to prepare a dough and baking or steaming the dough, wherein transglutaminase and protein partial hydrolysates are added together with other raw materials and mixed with the principal raw material grain flour.

2. A method according to claim 1, wherein the volume of water added in the preparation of the dough is larger than the volume of water conventionally added.

3. An enzyme preparation containing transglutaminase and protein partial hydrolysates as the effective ingredients.

4. Breads in the form of frozen products or intermediate dough products or as baked final products obtainable by a method according to claim 1 or 2.
